# EUROPEAN PATENT APPLICATION

(11) **EP 4 576 292 A1**
(43) Date of publication of application: **25.06.2025**
(21) Application number: 23886127.2
(22) Date of filing: 25.10.2023
(51) Int. Cl.: H01M 10/04

(54) **SHEET WINDING DEVICE FOR MANUFACTURING SECONDARY BATTERY**

(30) Priority: 31.10.2022 KR 20220142920
(71) Applicant: LG Energy Solution, Ltd., Seoul 07335 (KR)
(72) Inventor: CHOI, Inchan, Daejeon 34122 (KR); PARK, Chan Min, Daejeon 34122 (KR)
(74) Representative: Plasseraud IP
(86) International application number: PCT/KR2023/016654
(87) International publication number: WO 2024/096431

(57) **Abstract**

An apparatus for winding a sheet for manufacturing a secondary battery according to an embodiment of the present disclosure includes at least two bobbins including a traveling bobbin on which a winding process proceeds and a standby bobbin that is in a standby state during the winding process; and a sensor that is disposed apart from the standby bobbin by a predetermined distance, and identifies the position where the sheet wound onto the traveling bobbin will be automatically attached to the standby bobbin, wherein when the winding process on the traveling bobbin is completed, the sheet that was wound by the traveling bobbin is attached to the outer peripheral surface of the standby bobbin, and subsequently the winding process is performed.

## Description

### [TECHNICAL FIELD]

### Cross Citation with Related Application(s)

This application claims the benefit of Korean Patent Application No. 10-2022-0142920 filed on October 31, 2022 with the Korean Intellectual Property Office, the disclosure of which is incorporated herein by reference in its entirety.

The present disclosure relates to an apparatus used in the process of winding a sheet for manufacturing a secondary, and more particularly, to an apparatus for winding a sheet for manufacturing a secondary battery that can automatically recognize the position where the electrode sheet or separator sheet is connected to a bobbin, and can improve the winding performance of the electrode sheet or separator sheet.

### [BACKGROUND]

As the price of energy sources increases due to depletion of fossil fuels and the interest in environmental pollution increases, the demand for environmentally friendly alternative energy sources becomes an indispensable factor for future life. Therefore, research into various power generation technologies such as a nuclear power generation technology, a photovoltaic power generation technology, a wind power generation technology, a tidal power generation technology, and the like, has been continuously conducted, and a power storage device for efficiently using energy thus produced has also been interested.

Particularly, as the development of a technology and the demand for a mobile device have increased, the demand for a secondary battery as an energy source has rapidly increased, and thus, various research into secondary batteries capable of satisfying various requirements has been conducted.

Typically, the demand for lithium secondary batteries, such as lithium ion batteries and lithium ion polymer batteries, having advantages such as high energy density, discharge voltage and power stability, is very high.

A secondary battery may include a positive electrode and a negative electrode. The positive electrode consists of a positive electrode coated portion in which the positive electrode active material is coated onto the positive electrode current collector, and a positive electrode non-coated portion in which the positive electrode active material is not coated. Similarly, the negative electrode also consists of a negative electrode coated portion in which the negative electrode active material is coated onto the negative electrode current collector, and a negative electrode non-coated portion in which the negative electrode active material is not coated. The positive electrode non-coated portion and the negative electrode non-coated portion are provided with electrode tabs, respectively.

A porous separator is interposed between the positive electrode and the negative electrode, and such a separator not only insulates the positive electrode and the negative electrode from each other, but also allows active material ions to be exchanged between electrodes, thereby causing an electrochemical reaction.

Such a secondary battery is classified depending on a structure of an electrode assembly in which a positive electrode and a negative electrode are stacked with a separator being interposed between the positive electrode and the negative electrode. A representative example of the electrode assembly includes a jelly-roll type (wound type) electrode assembly having a structure in which long sheet-type positive and negative electrodes are wound with a separator being interposed therebetween, a stack type (stacked type) electrode assembly having a structure in which a plurality of positive and negative electrodes that are cut at a predetermined size unit are sequentially stacked with a separator being interposed therebetween, and the like. Recently, in order to solve problems of the jelly-roll type electrode assembly and the stack type electrode assembly, as an electrode assembly of a mixed type of the jelly-roll type and the stack type, a stacked/folding type electrode assembly having a structure in which unit cells in which positive and negative electrodes of a predetermined unit are stacked with a separator therebetween are sequentially wound while being positioned on a separation film, has been developed.

On the other hand, each electrode constituting the electrode assembly is manufactured in the form of a sheet and provided to the secondary battery manufacturing process. Typically, the electrode sheet that has gone through the electrode manufacturing process is wound in the form of a roll on a predetermined bobbin. The electrode sheet is wound around the bobbin while being supported by a final bobbin disposed at the front position of the bobbin.

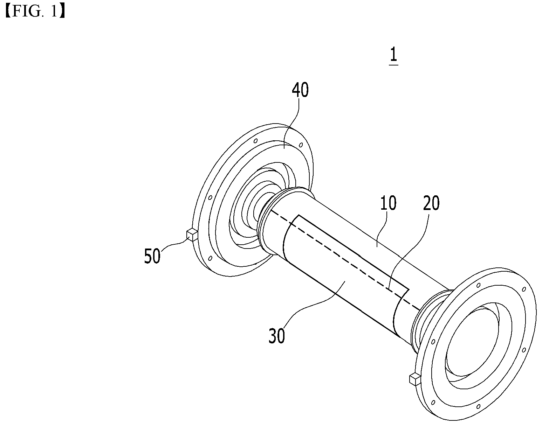

Referring to FIG. 1, in a conventional apparatus 1 for winding a sheet for manufacturing a secondary battery, a double-sided tape 30 is attached to a line-shaped mark 20 where the starting portion of the electrode sheet is attached to a bobbin 10. Further, in order to ensure that the starting portion of the electrode sheet on the bobbin 10 is accurately attached to the mark 20, at least one of the two mounting members 40 on both sides of the bobbin 10 is provided with a convex-shaped dog 50 that guides the starting portion of the electrode sheet, and the dog 50 is located on an extension line of the mark 20. An operator mounts the bobbin 10 on the apparatus 1 winding a sheet for manufacturing a secondary battery, and rotates the dog 50 so that the mark 20 of the bobbin 10 is placed in front of the operator. Further, the operator aligns the starting portion of the electrode sheet to the mark 20 and then manually attaches the electrode sheet to the double-sided tape 30 on the surface of the bobbin 10. Subsequently, the winding process of the electrode sheet proceeds.

There is a need to convert a conventional apparatus 1, in which a sheet for manufacturing a secondary battery winds in a manual manner, to an automated process manner to thereby increase the convenience and efficiency of the process.

### [DETAILED DESCRIPTION OF THE INVENTION]

### [Technical Problem]

It is an object of the present disclosure to provide an apparatus for winding a sheet for manufacturing a secondary battery, having a structure which can automatically recognize the attachment position of a sheet to a bobbin used in the winding process of a secondary battery manufacturing sheet (electrode sheet or separator sheet), and also can automatically attach the sheet to the bobbin to wind the sheet.

It is another object of the present disclosure to increase the convenience and efficiency of the process by using such an apparatus for winding a sheet for manufacturing a secondary battery, and also reducing the defective rate of the electrode winding roll by attaching the electrode roll to an accurate position.

However, the technical problems to be solved by the embodiments of the present disclosure are not limited to the above-described problems, and can be variously expanded within the scope of the technical idea included in the present disclosure.

### [Technical Solution]

According to one aspect of the present disclosure, there is provided an apparatus for winding a sheet for manufacturing a secondary battery, the apparatus comprising: at least two bobbins including a traveling bobbin on which a winding process proceeds and a standby bobbin that is in a standby state during the winding process; and a sensor that is disposed apart from the standby bobbin by a predetermined distance and detects a mark for identifying a position where the sheet wound onto the traveling bobbin will be automatically attached to the standby bobbin, wherein when the winding process on the traveling bobbin is completed, the sheet that was wound by the traveling bobbin is attached to an outer peripheral surface of the standby bobbin, and subsequently the winding process is performed.

By detecting the mark by the sensor may allow the position where the sheet of the standby bobbin is attached may be directed toward the sheet.

An adhesive member to which a start position of the sheet is attached is provided on the outer peripheral surface of the standby bobbin, and when detecting the mark by the sensor, the sheet may be attached onto the adhesive member of the standby bobbin.

The apparatus further comprises a turret that supports the traveling bobbin and the standby bobbin, and rotates the traveling bobbin and the standby bobbin, wherein, when the winding process on the traveling bobbin is completed by rotation of the turret, the winding process on the standby bobbin is subsequently performed.

The sheet passes between the standby bobbin and the pressure member and moves, and is wound onto the traveling bobbin, and when the winding process on the traveling bobbin is completed, the sheet is attached to the outer peripheral surface of the standby bobbin with the pressure member, cuts with a cutting member, and the winding process on the standby bobbin may be then performed.

When the winding of the sheet of the traveling bobbin is completed, the sensor may detect a mark on the standby bobbin.

During the winding process on the traveling bobbin, the sensor may previously detect the mark on the standby bobbin.

When the winding process on the traveling bobbin is completed, the apparatus may further comprise a pressure member that attaches the sheet to the outer peripheral surface of the standby bobbin.

The mark has a color that is distinguished from the outer peripheral surface of the standby bobbin, and the sensor may be a laser light sensor or a color sensor.

The adhesive member has a band shape and is located along the longitudinal direction of the bobbin, and the adhesive member may be located in contact with the mark or apart from the mark by a predetermined distance.

The outer peripheral surface of the standby bobbin is surrounded by a film member, and the adhesive member may be attached onto the film member.

The film member may be PET, PP, or HDPL vinyl.

The mark may be a finishing tape that finishes and secures an end position of the film member.

The pressure member may be a nip roller that is reciprocally movable toward the standby bobbin.

The apparatus may further comprise a guide member that changes or guides the moving direction of the sheet.

The guide member further comprises a first guide member located on a movement path between the traveling bobbin and the standby bobbin of the sheet, wherein a tension of the sheet between the traveling bobbin and the first guide member may be maintained by the first guide member, and a tension of the sheet between the first guide member and the standby bobbin may be maintained by the first guide member.

The first guide member may be a guide roller.

The first guide member may further comprise a dancer roller.

The mark may be a line that is shown wholly along the longitudinal direction of the bobbin, or a set of lines or dots that are only partially shown along the longitudinal direction of the bobbin.

The sheet may be any one of a positive electrode sheet, a negative electrode sheet, and a separator sheet of a secondary battery.

### [Advantageous Effects]

The present disclosure automatically recognizes the attachment position of a sheet to a bobbin used in the winding process of a secondary battery manufacturing sheet (electrode sheet or separator sheet), and automatically attaches the sheet to the bobbin, which increases the convenience and efficiency of the process, while it has the advantage of significantly lowering the defective rate of the electrode winding roll by attaching the electrode roll to an accurate position even in such an automated process.

### [BRIEF DESCRIPTION OF THE DRAWINGS]

FIG. 1 is a diagram schematically showing an apparatus for winding a sheet for manufacturing a secondary battery according to the prior art;
FIG. 2 is a diagram schematically showing an apparatus for winding a sheet for manufacturing a secondary battery according to an embodiment of the present disclosure;
FIG. 3 is a front view of the apparatus for winding a sheet for manufacturing a secondary battery of FIG. 2;
FIG. 4 is a side view of the apparatus for winding a sheet for manufacturing a secondary battery of FIG. 2;
FIG. 5 is a front view of a bobbin mounted on the apparatus for winding a sheet for manufacturing a secondary battery of FIG. 2; and
FIG. 6 is a perspective view of a bobbin according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

A description of portions that are irrelevant to the description will be omitted for clarity, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not necessarily mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Further, since the upper surface/lower surface or the upper part/lower part of a specific member can be determined differently depending on which direction is used as a reference, throughout the description, 'upper surface' or 'lower surface' are defined as meaning two facing surfaces on the z-axis of the corresponding member, and the 'upper part' and 'lower part' are defined as disposing opposite directions to each other on the z-axis of the corresponding member,

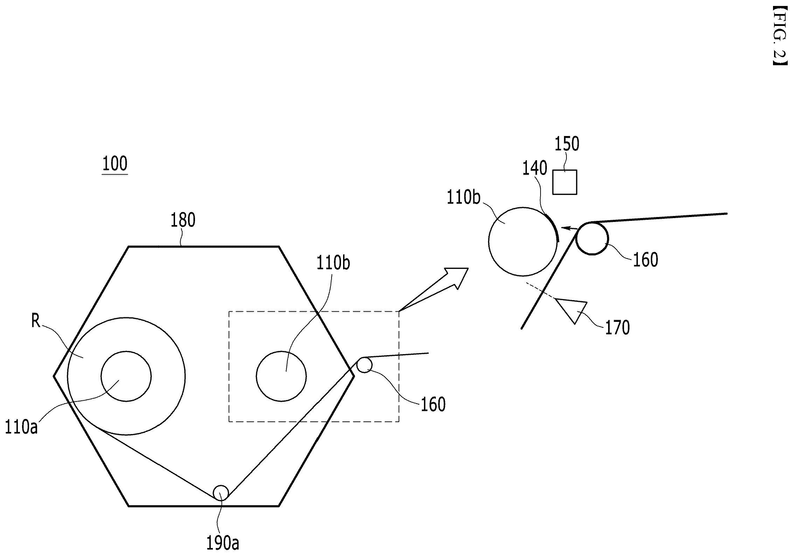

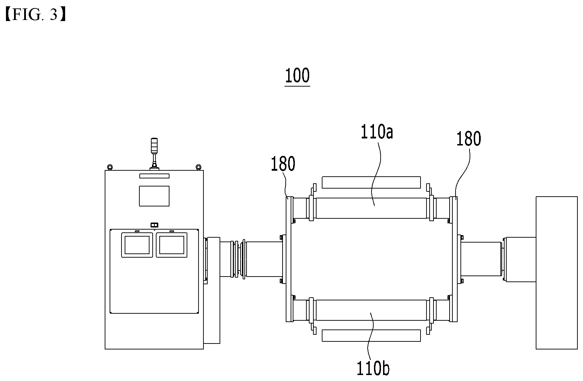

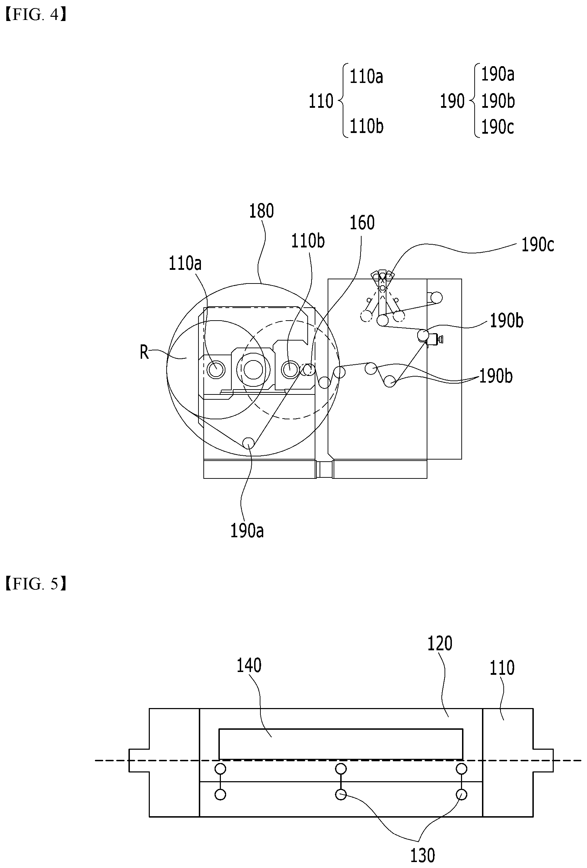

FIG. 2 is a diagram schematically showing an apparatus 100 for winding a sheet for manufacturing a secondary battery according to an embodiment of the present disclosure. FIG. 3 is a front view of the apparatus 100 for winding a sheet for manufacturing a secondary battery of FIG. 2. FIG. 4 is a side view of the apparatus 100 for winding a sheet for manufacturing a secondary battery of FIG. 2. FIG. 5 is a front view of a bobbin 110 mounted on the apparatus 100 for winding a sheet for manufacturing a secondary battery of FIG. 2.

The apparatus 100 for winding a sheet for manufacturing a secondary battery according to an embodiment of the present disclosure can be used to wind (rewind) an electrode sheet (positive electrode sheet or negative electrode sheet) on which a series of processes such as coating and drying have been completed in the secondary battery electrode manufacturing process. Alternatively, the apparatus can be used to wind (rewind) the separator sheet. However, the present disclosure is not limited thereto, and can be applied to various environments, such as being used to wind other films or sheets used during the electrode manufacturing process.
Hereinafter, for convenience of explanation, a case where the electrode sheet is wound will be described. When winding other sheets such as separator sheets, the following explanation can be applied similarly.

Referring to FIGS. 2 to 5, the apparatus 100 for winding a sheet for manufacturing a secondary battery according to an embodiment of the present disclosure includes at least two bobbins 110 on which electrode sheets are wound. In the present embodiment, a case including two bobbins 110 is illustrated.

Among the two bobbins 110, the traveling bobbin is a traveling bobbin 110a, and the standby bobbin is a standby bobbin 110b. The traveling bobbin 110a is a bobbin on which winding of the electrode sheet is performed. The standby bobbin 110b is a bobbin that is in a standby state, and then is replaced with the traveling bobbin 110a when the winding of the traveling bobbin 110a is completed, and performs the winding of the electrode sheet again in the same manner.

Meanwhile, the present disclosure is not limited to those described above, and the winding process may be performed simultaneously by installing a plurality of traveling bobbins 110a, and the winding process can also be performed one after another in such a manner that a plurality of standby bobbins 110b is installed, an operator mounts several standby bobbins 110b at a time on the apparatus 100 for winding a sheet for manufacturing a secondary battery, and performs winding on the next bobbin 110b if the winding on one bobbin 110 is completed.

A film member 120 is wrapped around the outer peripheral surface of the bobbin 110 along the periphery of the bobbin 110. The film member 120 may be, for example, vinyl, and may also be, for example, vinyl made of PET, PP or HDPL. The film member 120 may be surrounded around the outer peripheral surface of the bobbin 110 multiple times. An adhesive member 140 is adhered to the outer peripheral surface of the film member 120 that surrounds the bobbin 110, and an electrode sheet is adhered again onto the adhesive member 140. The adhesive member 140 may be, for example, a double-sided tape. That is, the film member 120 (vinyl) is wrapped around the outer peripheral surface of the bobbin 110, then an adhesive member 140 (double-sided tape) is attached thereto, and an electrode sheet is wound thereon. That is, the adhesive member 140 may be provided on the outer peripheral surface of the bobbin 110 with the film member 120 interposed therebetween.

This prevents the surface of the bobbin 110 from being contaminated by the adhesive member 140, and allows the bobbin 110 to be repeatedly reused.

On the other hand, the mark 130 is provided on the outer peripheral surface of the bobbin 110 or the outer peripheral surface of the film member 120 that surrounds the bobbin 110. The position at which the starting portion (start position) of the electrode sheet is attached, that is, the position of the adhesive member 140, which will be described later, is determined with reference to the mark 130. The sensor 150 is, for example, a laser light sensor or a color sensor, and the mark 130 has a color different from the color of the outer peripheral surface of the bobbin 110 or the film member 120 so that color can be detected by the sensor 150. In the case of the laser light sensor, it is a laser type photoelectric sensor, and recognizes the presence of the mark 130 through the intensity returned after reflection on the film member 120 with a white background and the colored mark 130. Therefore, the position of the adhesive member 140 can be identified by detecting the position of the mark 130. The sensor 150 is disposed near the bobbin 110 and spaced apart from the bobbin 110 by a predetermined distance.

When the film member 120 surrounds the bobbin 110, a mark 130 may be located along the longitudinal direction of the bobbin 110 at the end point of the film member 120. Alternatively, the mark 130 may be located on the outer peripheral surface of the bobbin 110 along the longitudinal direction of the bobbin 110, and the film member 120 may be made of a transparent material.

Further, the shape or form of the mark 130 is not limited, and is sufficient if it can mark the starting portion of the electrode sheet and detect the color with the sensor 150. The mark 130 may be a solid line or a dotted line, or may be a line that is shown wholly along the longitudinal direction of the bobbin 110. Alternatively, it may be a set of lines or dots that are only partially shown along the length direction of the bobbin 110. For example, it may be a solid line extending along the whole length direction of the bobbin 110, but can be modified and changed in various ways, such as showing a plurality of dot shapes here and there along the longitudinal direction of the bobbin 110.

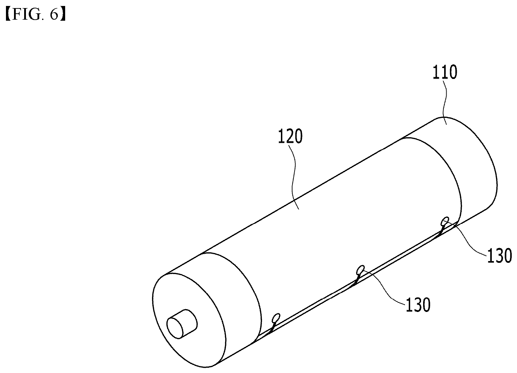

FIG. 6 is a perspective view of a bobbin according to an embodiment of the present disclosure. In the present embodiment, a case is illustrated in which the mark 130 is a finishing sticker for fixing the film member 120.

On the other hand, the adhesive member 140 may be attached to the entire outer peripheral surface of the bobbin 110. In this case, in case where the electrode sheet is wound along the adhesive member 140 surrounded by the entire bobbin 110, if the electrode sheet is incorrectly attached to part or all of the adhesive member 140 and the electrode sheet is attached in a curved or uneven manner, there is a risk that the electrode roll R that is subsequently wound around the bobbin 110 may not be smooth.

Referring again to FIGS. 2 to 5, it is more preferable that the adhesive member 140 has a band shape with a constant width, and is attached to a part of the outer peripheral surface of the bobbin 110 along the portion where the mark 130 is located apart from the mark 130 by a predetermined distance. In the latter case, as described later, the electrode sheet is fixed to the adhesive member 140 located at the mark 130, and then, when the bobbin 110 rotates while maintaining a constant tension on the electrode sheet, the electrode sheet may be smoothly wound along the periphery of the bobbin 110.

FIG. 5 illustrates case where the adhesive member 140 is attached to a part of the outer peripheral surface of the bobbin 110 by being spaced apart from the mark 130 by a predetermined distance (e.g., 10 mm).

For example, as illustrated in FIG. 5, the adhesive member 140 is attached with reference to the mark 130. An operator may wrap the film member 120 around the bobbin 110 in advance, attaches the adhesive member 140 thereon, and then can mount the bobbin 110 on the apparatus 100 for winding a sheet for manufacturing a secondary battery. Alternatively, the bobbin 110 is mounted on the apparatus 100 for winding a sheet for manufacturing a secondary battery, and then various modifications and changes can be made, such as the film member 120 being wrapped with a nip roller or the like provided in the apparatus 100 for winding a sheet for manufacturing a secondary battery, and being able to attach the adhesive member 140.

Referring to FIG. 2, a method of winding an electrode sheet onto the traveling bobbin 110a and then winding it again onto the standby bobbin 110b in the same manner will be described. When the winding of the electrode sheet onto the running bobbin 110a is completed, the following operation is performed in order to subsequently attach the electrode sheet to the standby bobbin 110b.

First, the standby bobbin 110b rotates slowly, and the mark 130 on the standby bobbin 110b is detected by the sensor 150, so that the mark 130 is located at a predetermined position where it can contact the pressure member 160. The pressure member 160 is, for example, a nip roller.

As the sensor 150 detects the color of the mark 130, the mark 130 may be located so as to face the pressure member 160. Alternatively, the sensor 150 detects the color of the mark 130, the standby bobbin 110b rotates a little more for a predetermined time or at a predetermined angle, and then the mark 130 may be located so as to face the pressure member 160. This can be modified, changed and applied in various ways depending on various environments in which the invention is implemented, that is, the spacing arrangement between the standby bobbin 110b, the sensor 150, and the pressure member 160, and the like. The important point is that the mark 130 can be detected by the sensor 150, and the electrode sheet can be accurately attached to the electrode attachment position (i.e., the adhesive member 140) of the standby bobbin 110b, as described later.

Further, when the winding of the electrode sheet on the traveling bobbin 110a is completed, the sensor 150 may detect the mark 130 on the standby bobbin 110b, but even while the traveling bobbin 110a is winding the electrode sheet, the sensor 150 detects the mark 130 on the standby bobbin 110b in advance, and the electrode attachment position (i.e., adhesive member 140) of the standby bobbin 110b can also be kept in a standby state in advance in the direction of the electrode sheet.

The electrode sheet passes between the pressure member 160 and the standby bobbin 110b. The pressure member 160 moves toward the standby bobbin 110b, the electrode sheet is attached to the adhesive member 140 of the standby bobbin 110b using the pressure member 160, and then separated from the standby bobbin 110b again. At this time, the electrode sheet is cut along the dotted line shown in FIG. 2 using the cutting member 170.

On the other hand, the turret 180 rotates 180 degrees with reference to the central axis, and the standby bobbin 110b to which the electrode sheet is attached moves toward the existing traveling bobbin 110a to start winding the electrode sheet. For convenience of explanation, they are named the traveling bobbin 110a and the standby bobbin 110b, but when the standby bobbin 110b moves toward the traveling bobbin 110a and performs winding of the electrode sheet, the standby bobbin 110b in the previous winding step becomes the traveling bobbin 110a in the corresponding winding step, and the electrode roll wound onto the traveling bobbin 110a in the previous winding step is detached and transferred to the next process. When a new bobbin 110 is installed, it becomes the standby bobbin 110b in the corresponding winding step.

The rotation angle of the turret 180 is not limited to those described above, and can be modified or changed in accordance with various environments in which the invention is implemented. For example, as the number of bobbins 100, the position where the traveling bobbin 110a, which performs winding of the electrode sheet, is mounted, and the position where the standby bobbin 110b, where the electrode sheet is attached by the pressure member 160, is mounted, etc. change, it can be modified, changed, and applied in various ways.

The apparatus 100 for winding a sheet for manufacturing a secondary battery further comprises a guide member 190 that changes or guides the movement direction of the electrode sheet. The number, type, position, etc. of the guide members 190 are not particularly limited, and various modifications and changes can be made in accordance with the environment in which the invention is implemented. The guide member 190 may be, for example, in the form of a roller. The guide roller 190a located in the path between the traveling bobbin 110a and the standby bobbin 110b facilitates winding in the traveling bobbin 110a, while it also makes it easy to attach the electrode sheet to the standby bobbin 110b using the pressure member 160. In addition, the guide roller 190a supports the electrode sheet and maintains the tension of the electrode sheet, thereby preventing the traveling bobbin 110a and the standby bobbin 110b from unintentionally influencing each other due to the above-described operations. The apparatus 100 for winding a sheet for manufacturing a secondary battery may further comprise a dancer roller 190c in the path of the electrode sheet.

Further, the apparatus 100 for winding a sheet for manufacturing a secondary battery comprises a driving means (not shown) that drives a frame (not shown) supporting a bobbin 110 or a turret 180, and the components such as a bobbin 110, the turret 180, and the pressure member 160.

In the above-described manner, the electrode sheets are sequentially wound up while the traveling bobbin 110a and the standby bobbin 110b rotate.

According to the present disclosure described above, after the winding process on one bobbin is completed, the sheet can be automatically attached to another bobbin and the winding process can be performed again, thereby reducing the time required to replace the bobbin. This improves the production efficiency of the process.

It will be apparent to those skilled in the art that various modifications and variations can be made in the present disclosure without departing from the spirit and scope of the present disclosure.

Although preferred embodiments of the present disclosure have been described in detail above, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: apparatus for winding a sheet for manufacturing a secondary battery 110: bobbin 110a: traveling bobbin 110b: standby bobbin 120: film member 130: mark 140: adhesive member 150: sensor 160: pressure member 170: cutting member 180: turret 190: guide member

## Claims

1. An apparatus for winding a sheet for manufacturing a secondary battery, the apparatus comprising:
at least two bobbins including a traveling bobbin on which a winding process proceeds and a standby bobbin that is in a standby state during the winding process; and
a sensor that is disposed apart from the standby bobbin by a predetermined distance and detects a mark for identifying a position where the sheet wound onto the traveling bobbin will be automatically attached to the standby bobbin,
wherein when the winding process on the traveling bobbin is completed, the sheet that was wound by the traveling bobbin is attached to an outer peripheral surface of the standby bobbin, and subsequently the winding process is performed.

2. The apparatus for winding a sheet for manufacturing a secondary battery according to claim 1, wherein:
the sheet is any one of a positive electrode sheet, a negative electrode sheet, and a separator sheet of a secondary battery.

3. The apparatus for winding a sheet for manufacturing a secondary battery according to claim 1, wherein:
by detecting the mark by the sensor, the position where the sheet of the standby bobbin will be attached is directed toward the sheet.

4. The apparatus for winding a sheet for manufacturing a secondary battery according to claim 1, wherein:
an adhesive member to which a start position of the sheet is attached is provided on the outer peripheral surface of the standby bobbin, and
when detecting the mark by the sensor, the sheet is attached onto the adhesive member of the standby bobbin.

5. The apparatus for winding a sheet for manufacturing a secondary battery according to claim 1, further comprising:
a turret that supports the traveling bobbin and the standby bobbin, and rotates the traveling bobbin and the standby bobbin,
wherein, when the winding process on the traveling bobbin is completed by rotation of the turret, the winding process on the standby bobbin is subsequently performed.

6. The apparatus for winding a sheet for manufacturing a secondary battery according to claim 1, wherein:
the sheet passes between the standby bobbin and the pressure member and moves, and is wound onto the traveling bobbin, and
when the winding process on the traveling bobbin is completed, the sheet is attached to the outer peripheral surface of the standby bobbin with the pressure member, cuts with a cutting member, and the winding process on the standby bobbin is then performed.

7. The apparatus for winding a sheet for manufacturing a secondary battery according to claim 1, wherein:
when the winding of the sheet of the traveling bobbin is completed, the sensor detects a mark on the standby bobbin.

8. The apparatus for winding a sheet for manufacturing a secondary battery according to claim 1, wherein:
during the winding process on the traveling bobbin, the sensor previously detects the mark on the standby bobbin.

9. The apparatus for winding a sheet for manufacturing a secondary battery according to claim 1, wherein:
when the winding process on the traveling bobbin is completed, the apparatus further comprises a pressure member that attaches the sheet to the outer peripheral surface of the standby bobbin.

10. The apparatus for winding a sheet for manufacturing a secondary battery according to claim 1, wherein:
the mark has a color that is distinguished from the outer peripheral surface of the standby bobbin, and
the sensor is a laser light sensor or a color sensor.

11. The apparatus for winding a sheet for manufacturing a secondary battery according to claim 4, wherein:
the adhesive member has a band shape and is located along the longitudinal direction of the bobbin, and
the adhesive member is located in contact with the mark or apart from the mark by a predetermined distance.

12. The apparatus for winding a sheet for manufacturing a secondary battery according to claim 4, wherein:
the outer peripheral surface of the standby bobbin is surrounded by a film member, and
the adhesive member is attached onto the film member.

13. The apparatus for winding a sheet for manufacturing a secondary battery according to claim 12, wherein:
the film member is PET, PP, or HDPL vinyl.

14. The apparatus for winding a sheet for manufacturing a secondary battery according to claim 12, wherein:
the mark is a finishing tape that finishes and secures an end position of the film member.

15. The apparatus for winding a sheet for manufacturing a secondary battery according to claim 1, wherein:
the pressure member is a nip roller that is reciprocally movable toward the standby bobbin.

16. The apparatus for winding a sheet for manufacturing a secondary battery according to claim 1, further comprising:
a guide member that changes or guides the moving direction of the sheet.

17. The apparatus for winding a sheet for manufacturing a secondary battery according to claim 16, wherein:
the guide member further comprises a first guide member located on a movement path between the traveling bobbin and the standby bobbin of the sheet,
wherein a tension of the sheet between the traveling bobbin and the first guide member is maintained by the first guide member, and a tension of the sheet between the first guide member and the standby bobbin is maintained by the first guide member.

18. The apparatus for winding a sheet for manufacturing a secondary battery according to claim 17, wherein:
the first guide member is a guide roller.

19. The apparatus for winding a sheet for manufacturing a secondary battery according to claim 16, wherein:
the first guide member further comprises a dancer roller.

20. The apparatus for winding a sheet for manufacturing a secondary battery according to claim 1, wherein:
the mark is a line that is shown wholly along the longitudinal direction of the bobbin, or a set of lines or dots that are only partially shown along the longitudinal direction of the bobbin.
